# EUROPÄISCHE PATENTSCHRIFT

(11) **EP 1 703 607 B1**
(45) Veröffentlichungstag und Bekanntmachung des Hinweises auf die Patenterteilung: **07.04.2010**
(21) Anmeldenummer: 06003986.4
(22) Anmeldetag: 27.02.2006
(51) Int. Cl.: H02G 3/18

(54) **Kralle zur Befestigung einer Antennendose**
Mounting claw for fixation of antenna socket outlet
Griffe d'ancrage pour la fixation d'une prise d'antenne

(30) Priorität: 16.03.2005 DE 102005012477; 12.09.2005 DE 102005043137
(43) Veröffentlichungstag der Anmeldung: 20.09.2006
(73) Patentinhaber: Hirschmann Multimedia Electronics GmbH, 72654 Neckartenzlingen (DE)
(72) Erfinder: Frische, Markus, 72622 Nürtingen (DE); Schmid, Gerd, 73240 Wendlingen (DE); Gerber, Magnus, 72555 Metzingen (DE); Pasadu, Chaiyakarn, 73240 Wendlingen (DE); Werner, Stefan, 78052 Villingen-Schwenningen (DE); Wirths, Marc, 72639 Neuffen (DE); Epple, Ralf, 73669 Lichtenwald (DE); Ernst, Ralf, 73054 Eislingen (DE)
(74) Vertreter: Greif, Thomas

(56) Entgegenhaltungen:
- EP-A- 0 349 937
- DE-A1- 4 032 142
- DE-U1- 9 216 477

## Beschreibung

Die Erfindung betrifft eine Antennendose mit einer Kralle zur Befestigung der Antennendose in einer Aufnahmevorrichtung gemäß den Merkmalen des Oberbegriffes des Patentanspruchs 1.

Antennendosen zum Einbau in einer Aufnahmevorrichtung, wie z. B. einer Unterputzdose, sind bekannt. Seitlich an einem etwa topfförmig ausgebildeten Grundkörper der Antennendose sind meistens zwei Krallen befestigt, die so gestaltet sind, dass sie mittels einer Schraube gespreizt werden können, so dass sich die Krallen an der Aufnahmevorrichtung abstützen und damit die Antennendose in diese Aufnahmevorrichtung festlegen.

Bei einer aus der DE 40 32 142 A1 bekannten Ausführungsformeiner Steckdose weist die Kralle ein Oberteil mit einer Öffnung sowie ein sich daran anschließendes abgewinkeltes Mittenteil und vorzugsweise ein sich daran anschließendes abgewinkeltes Unterteil auf, wobei die Kralle mittels einer einen Kopf aufweisenden Schraube an dem Grundkörper der Steckdose befestigbar ist und die Kralle durch Verdrehen der Schraube relativ und abspreizend zu dem Grundkörper bewegbar ist, wobei der Grundkörper eine Einschrauböffnung zur Aufnahme der Schraube aufweist. Die Öffnung in dem Oberteil der Kralle ist dabei zylinderförmig und weist einen größeren Durchmesser auf als die Schraube selber. Aufgrund ihrer abgewinkelten Form und Abstützung an dem Grundkörper spreizt sich die Kralle beim Eindrehen der Schraube in die Einschrauböffnung nach außen und legt damit die Steckdose in der Aufnahmevorrichtung fest. Die Art und Weise dieser Befestigung hat sich bewährt, weist aber grundsätzlich Nachteile auf. Aufgrund der gegenüber der Schraube durchmessergrößeren Öffnung in dem Oberteil der Kralle ist ein Spiel der Kralle gegeben, so dass vor dem Einsetzen der Steckdose in die Aufnahmevorrichtung die beiden sich gegenüberliegenden Krallen mit einem Gummiring an dem Grundkörper angelegt werden müssen, damit die Steckdose in die Aufnahmevorrichtung eingesetzt werden kann. Wird dann die Schraube in die Einschrauböffnung eingedreht, können die Krallen gespreizt werden, da die Haltekraft des Gummiringes zu gering ist. Das bedeutet, dass nach der Herstellung der Steckdose diese zusätzlich mit dem Gummiring versehen werden muss. Ein solcher hat jedoch den Nachteil, dass er im Laufe der Zeit brüchig und spröde wird, so dass er ausgewechselt werden muss, aber am Einbauort der Steckdose nicht immer zur Verfügung steht. Außerdem ist aufgrund der bekannten Konstruktion ein großes Spiel zwischen der Kralle und der Schraube sowie dem Grundkörper möglich, so dass keine geführte Bewegung der Kralle relativ zu dem Grundkörper gegeben ist, was auch einen qualitativ negativen Eindruck der Steckdose bei ihrem Handling hinterlässt.

Die DE 92 16 477 U1 zeigt eine durch eine Stellschraube betätigbare schwenkbar gelagerte Spreizkralle für ein elektrisches Unterputz-Installationsgerät wie Schalter, Taster, Steckdose oder dergleichen, mit einem Stellschenkel, der mit der Stellschraube zusammenwirkt und wenigstens einen Krallenschenkel aufweist, der durch Drehen der Stellschraube in einer Richtung vom Installationsgerät wegschwenkt und in der anderen Richtung zurückgeschwenkt wird, wobei der Stellschenkel eine Aussparung aufweist, in die die Stellschraube mit einem vorzugsweise gewindelosen Teil des Schaftes beweglich eingesetzt und durch einen angeformten Vorsprung des Schaftes gesichert ist, wobei der Vorsprung an der Stellschraube um ein geringes Maß größer ist als die Aussparung, wobei weiterhin der Vorsprung und die Aussparung als Presssitz ausgebildet sind und die Stellschraube mit dem Vorsprung durch die Aussparung des Stellschenkels hindurchgepresst beziehungsweise hineingedrückt ist in den gewindelosen Teil.

Der Erfindung liegt daher die Aufgabe zugrunde, eine Kralle zur Befestigung einer Antennendose in eine Aufnahmevorrichtung und eine entsprechende Ausgestaltung der Antennendose selber bereitzustellen, mit der die eingangs geschilderten Nachteile vermieden werden, vor allen Dingen die Befestigung der Antennendose in eine Aufnahmevorrichtung, wie z. B. einer Unterputzdose, verbessert wird.

Diese Aufgabe ist durch die Merkmale des Patentanspruches 1 gelöst.

Erfindungsgemäß ist vorgesehen, dass die Öffnung in dem Oberteil der Kralle trichterförmig ausgebildet ist. Dadurch wird es in vorteilhafter Weise ermöglicht, dass sich die Kralle definiert an der Antennendose, insbesondere an deren Grundkörper, abstützt und in Abhängigkeit der Stellung der Schraube in der Einschrauböffnung in einer definierten Lage relativ zu dem Grundkörper gehalten wird. Das bedeutet, dass die Spreizung der Kralle in Bezug auf den Grundkörper jederzeit durch ein Verdrehen der Schraube geändert werden kann, wobei die dann erreichte Stellung der Kralle relativ zu dem Grundkörper gehalten wird aufgrund der trichterförmigen Ausbildung der Öffnung im Oberteil der Kralle. Daher kann der zum Zusammenhalten der Krallen erforderliche Gummiring entfallen und die Krallen in vorteilhafter Weise nach der Herstellung der Antennendose z. B. durch eine entsprechende Stellung der Schraube in eine Vormontagestellung gehalten werden, in denen die Krallen an dem Grundkörper der Antennendose anliegen. In einem solchen Zustand der Krallen kann die Antennendose in die Aufnahmevorrichtung eingesetzt, die Schraube verdreht werden, damit sich die Krallen an der Aufnahmevorrichtung abstützen und damit die Antennendose in dieser festlegen.

Weitere Ausgestaltungen der Kralle und die sich daraus ergebenden Vorteile sind in den Unteransprüchen angegeben, im folgenden beschrieben und in den Figuren gezeigt, wobei sich die Erfindung nicht auf das in den Figuren gezeigte Ausführungsbeispiel beschränkt.

Es zeigen:
- Figur 1: eine dreidimensionale Ansicht einer Antennendose,
- Figur 2: den Ausschnitt A gemäß Figur 1,
- Figur 3: eine Draufsicht auf die Antennendose gemäß Figur 1 zur Kenn- zeichnung des Schnittes E-E,
- Figur 4: den Schnitt E-E gemäß Figur 3,
- Figur 5: den Ausschnitt F gemäß Figur 4.

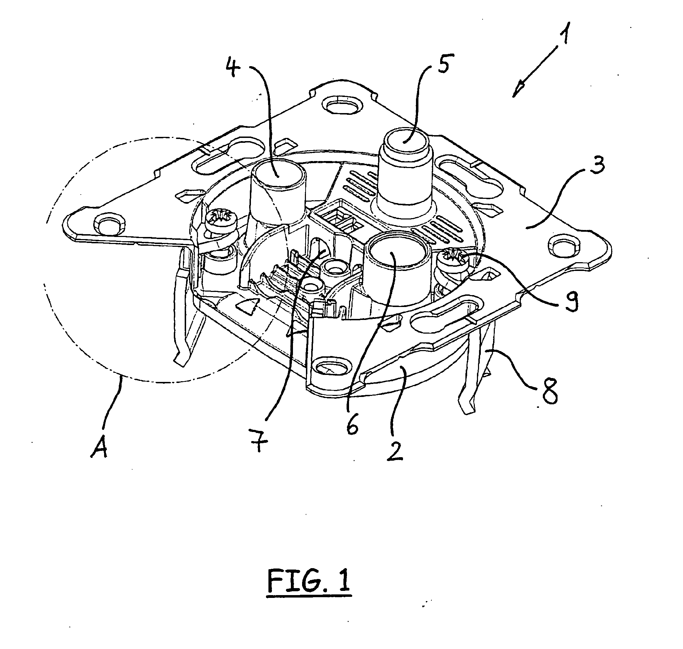

Figur 1 zeigt als beispielhaftes Ausführungsbeispiel eine dreidimensionale Ansicht einer Antennendose 1, die zum Einsetzen in eine Aufnahmevorrichtung, wie in eine Unterputzdose, ausgebildet ist. Die Antennendose 1 weist einen Grundkörper 2 auf, der beispielsweise ein Druckgußbauteil ist. Der Grundkörper 2 weist einen Rahmen 3 auf, der bewirkt, dass die Antennendose 1 zum Beispiel in der Unterputzdose auf einer Wand in einer definierten Stellung gehalten wird. Weiterhin sind Anschlussmittel 4 bis 6 ausgangsseitig vorhanden, an die hochfrequenztechnische Einrichtungen, wie Fernseher, Radioempfänger, Modems und dergleichen angeschlossen werden können. Eingangsseitig sind Anschlußmittel 7 vorhanden, an die Leitungen, wie Koaxialleitungen, verdrillte Zweidrahtleitungen oder dergleichen, angeschlossen werden können.

An dem Grundkörper 2 der Antennendose 1 ist eine Kralle 8, vorzugsweise sind zwei sich gegenüberliegende Krallen, angeordnet, die mittels einer Schraube 9 festgelegt und bewegbar sind.

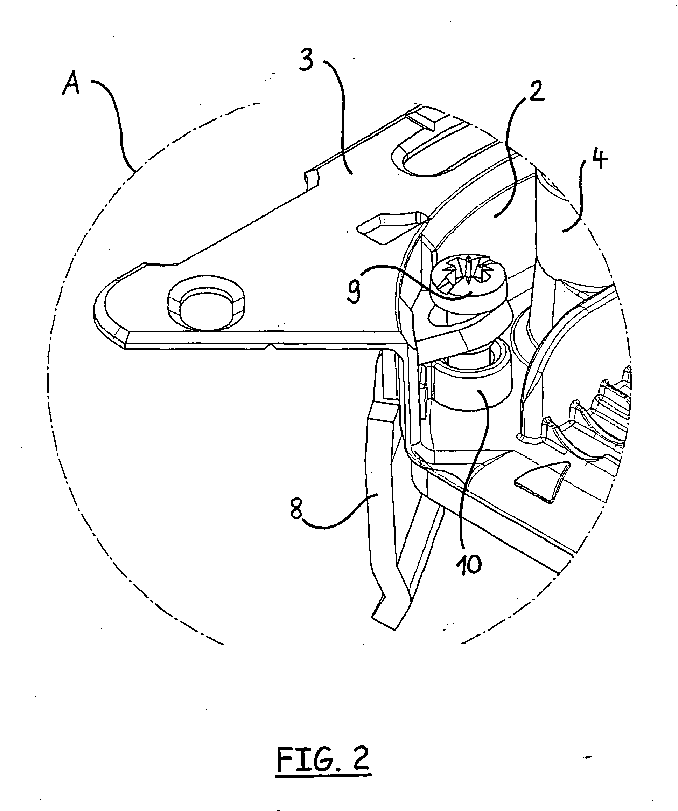

Figur 2 zeigt den Ausschnitt A gemäß Figur 1, aus dem die Lage der Kralle 8 und deren Befestigung mittels der Schraube 9 an dem Grundkörper 2 ersichtlich ist. Zur Aufnahme der Schraube 9 ist eine Einschrauböffnung 10 in dem Grundkörper 2 vorhanden, wobei diese Einschrauböffnung schon mit Herstellung des Grundkörpers 2 an diesem angeformt ist, alternativ dazu aber auch nachträglich eingebracht werden kann. Hat die Schraube 9 ein metrisches Gewinde, so wird in die Einschrauböffnung 10 ein korrespondierendes metrisches Gewinde eingebracht, wobei es auch denkbar ist, dass die Schraube 9 ein selbstschneidendes Gewinde aufweist und die Einschrauböffnung 10 lediglich in den Grundkörper 2 bei der Herstellung des Grundkörpers 2 eingebracht oder nachträglich gebohrt wird.

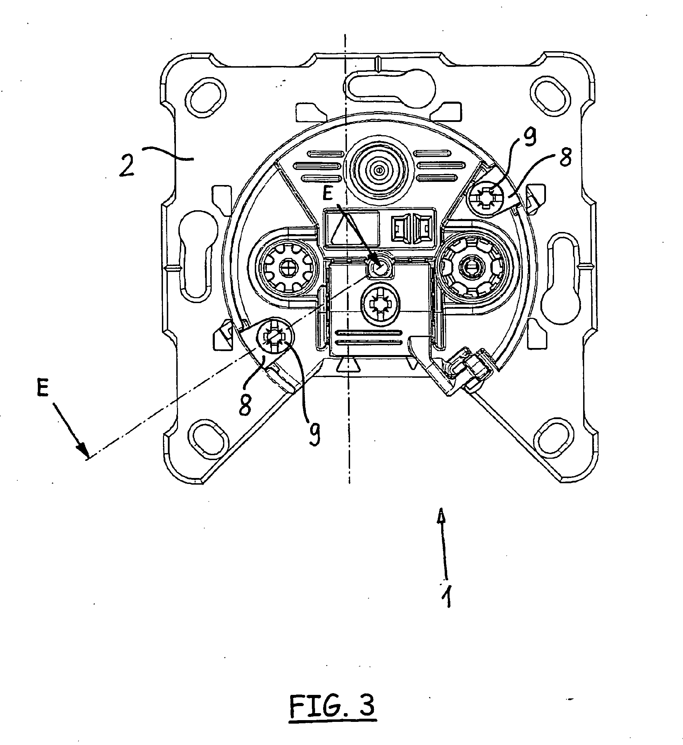

Figur 3 zeigt eine Draufsicht auf die Antennendose 1 gemäß Figur 1 zur Kennzeichnung des Schnittes E-E und zur Darstellung, dass zwei Krallen 8 vorhanden sind, die sich diametral gegenüber liegen. Auch andere Anordnungen und eine andere Anzahl von Krallen 8, z. B. drei oder vier Krallen, die am äußeren Umfang des Grundkörpers 2 angeordnet sind und sich vorzugsweise symmetrisch gegenüber liegen, sind denkbar.

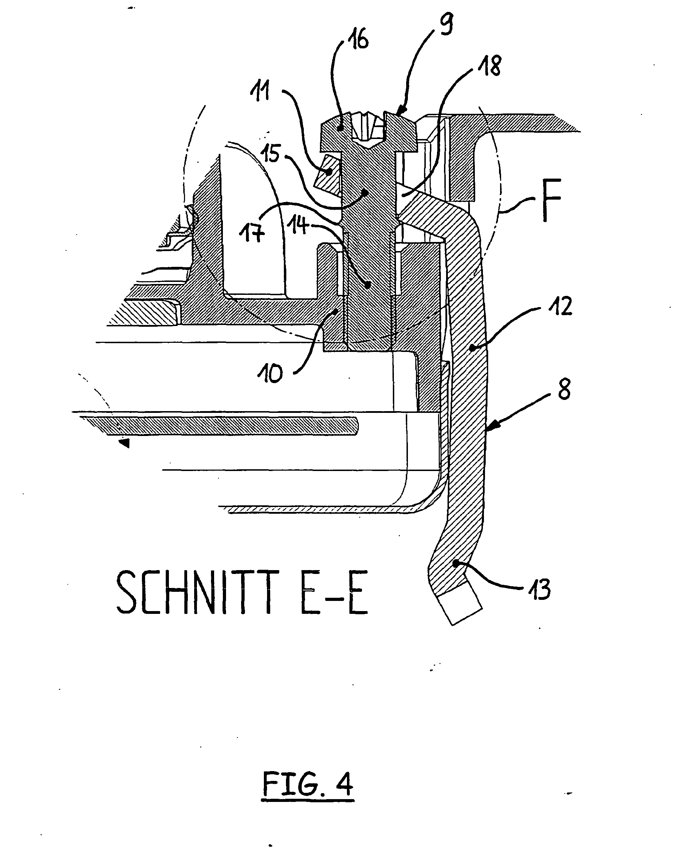

Figur 4 zeigt den Schnitt E-E gemäß Figur 3 durch die Antennendose 1. Hier ist erkennbar, dass die Kralle 8 ein Oberteil 11, ein sich daran anschließendes abgewinkeltes Mittenteil 12 und ein sich daran anschließendes abgewinkeltes Unterteil 13 aufweist. Die Kralle 8 kann in dieser Form zum Beispiel ebenfalls in einem Druckgußverfahren oder einem Stanzbiegeverfahren hergestellt worden und von der gezeigten geometrischen Form abweichen und dementsprechend andere Formen aufweisen. Die Schraube 9 weist einen Gewindeteil 14, vorzugsweise ein metrisches Gewinde, auf. Dem Gewindeteil 14 schließt sich ein gewindefreies Teil 15 und abschließend ein Kopf 16 an, wobei zwischen dem Gewindeteil 14 und dem gewindefreien Teil 15 ein Bundsteg 17 angeformt ist. Der Bundsteg 17 hat einen in etwa dreieckigen Querschnitt, dessen Wirkung und Vorteile noch beschrieben wird. Die Schraube 9 wird durch eine Öffnung 18 in dem Oberteil 11 der Kralle 8 eingesetzt, so dass sich der gewindefreie Teil 15 zwischen dem Bundsteg 17 und dem Kopf 16 der Schraube 9 erstreckt. Dabei ist erkennbar, dass die Öffnung 18 trichterförmig ausgebildet ist, wobei die Vorteile dieser Ausgestaltung schon beschrieben wurden und noch einmal im Zusammenhang mit der folgenden Figur erläutert werden.

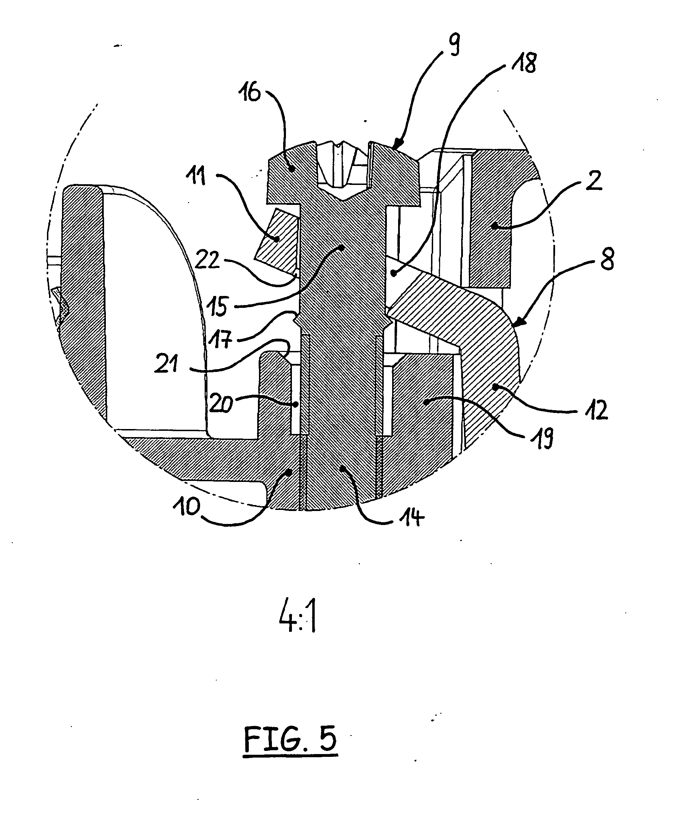

Figur 5 zeigt den Ausschnitt F gemäß Figur 4 in vierfacher Größe, um die Details besser erkennen und erläutern zu können. Neben den schon in den vorangegangen Figuren gezeigten Elementen und mit den gleichen Bezugsziffern versehenden Elementen ist hier noch erkennbar, dass die Einschrauböffnung 10 für die Schraube 9 einen Kragen 19 aufweist, wobei zwischen der eingesetzten Schraube 9 und der Innenkontur des oberen Teiles des Kragens 9 ein Freiraum 20 gegeben ist, wobei der Freiraum 20 an seinem oberen Ende eine Abschrägung 21 aufweist, die das Einsetzen der Schraube 9, insbesondere dessen Gewindeteil 14, in die Einschrauböffnung 10, insbesondere deren korrespondierendes Innengewinde, erleichtert.

Mit Blick auf Figur 5 ist erkennbar, dass das Oberteil 11 der Kralle 8 so gestaltet ist, dass es geführt von dem Kopf 16 und dem Bundsteg 17 relativ zu dem Grundkörper 2 bewegbar ist. Das bedeutet, dass das Oberteil 11 der Kralle 8 zwischen der Unterseite des Kopfes 16 und dem oberen Teil des Bundsteges 17 quasi eingespannt ist und damit relativ zu dem Grundkörper 2 bewegbar ist, wenn die Schraube 9 in die Einschrauböffnung 10 ein- bzw. ausgedreht wird. Hierzu ist die Kralle so ausgebildet, dass sie sich mit ihrem Übergangsbereich zwischen dem Oberteil 11 und dem Mittenteil 12 an dem Grundkörper 2 und dem Kragen 19 der Einschrauböffnung 10 abstützt. Das bedeutet, dass die Kralle 8 aufgrund ihrer Abstützung an dem Grundkörper 2 und dem Kragen 19 (oder einem sonstigen Bereich des Grundkörpers 2) als Hebel ausgebildet ist, der ein freies Ende aufweist, nämlich das Unterteil 13, und ein eingespanntes Ende aufweist, nämlich das Oberteil 11. Aufgrund dieser im Detail in Figur 5 gezeigten Ausgestaltung der beteiligten Elemente und deren Abstimmung aufeinander wird also die Wirkung erzielt, dass die Kralle 8 in Abhängigkeit der Stellung der Schraube 9 in dem Grundkörper 2 immer eine definierte Stellung zu dem Grundkörper 2 einnimmt, wobei durch die trichterförmige Ausformung der Öffnung 18 die folgenden Vorteile resultieren. Die trichterförmige Innenkontur der Öffnung 18 ist nämlich so gestaltet, dass in einer ersten Stellung der Schraube 9, vorzugsweise einer Vormontagestellung, die Innenflächen der Öffnung 18 an dem gewindefreien Teil 15 der Schraube 9 anliegen und in einer zweiten Stellung der Schraube 9, vorzugsweise einer Endmontagestellung, wieder an dem gewindefreien Teil 15 der Schraube 9 anliegen und während einer axialen Bewegung der Schraube 9 zwischen diesen beiden Stellungen, also ein Ein- oder Ausdrehen in oder in die Einschrauböffnung 10, nicht an dem gewindefreien Teil 15 der Schraube 9 anliegen. In Figur 5 ist die Vormontagestellung gezeigt, wobei erkennbar ist, dass die linke Innenfläche der Öffnung 18 planparallel an dem gewindefreien Teil 15 der Schraube 9 anliegt. Durch diese Stellung und die Abstützung des Übergangsbereiches zwischen dem Oberteil 11 und dem Mittenteil 12 der Kralle 8 an dem Grundkörper 2 einerseits und dem Kragen 19 andererseits ist die Kralle 8 geführt an dem Grundkörper 2 festgelegt und kann nicht mehr bewegt werden, abgesehen von kleinstmöglichen Bewegungen aufgrund von Toleranzen, die aber nicht nachteilig sind. In diesem Zustand (Vormontagestellung) liegt das Mittenteil 12 ebenfalls weitestgehend parallel an dem Grundkörper 12 an. Ist die Antennendose in die Aufnahmevorrichtung eingesetzt worden, wird die Schraube 9 zum Beispiel mit einem Schraubendreher oder einem sonstigen Werkzeug in die Einschrauböffnung 10 hineingeschraubt, so dass die Unterseite des Kopfes 16 auf die obere Kante des Oberteiles 11 drückt und während der axialen Bewegung der Schraube die Innenkontur der Öffnung 18 von dem gewindefreien Teil 15 der Schraube 9 abhebt. Dieses Abheben bewirkt eine Reduzierung des Kraftaufwandes beim Eindrehen der Schraube 9, da Reibungen zwischen der Öffnung 18 und der Schraube 9 zwar nicht ganz aufgehoben werden, aber gegenüber bekannten Lösungen doch wesentlich reduziert werden. Während des Eindrehens stützt sich die Kralle 8 nach wie vor mit ihrem Übergangsbereich zwischen dem Oberteil 11 und dem Mittenteil 12 an dem Grundkörper 2 und dem Kragen 19 ab, was bewirkt, dass das Mittenteil 12 mit Unterteil 13 der Kralle 8 sich von dem Grundkörper 2 abspreizt, um die Antennendose 1 in der Aufnahmevorrichtung festzulegen. Die im Regelfall genormten Geometrien der Antennendose 1 und der zugehörigen Aufnahmevorrichtung bewirken, dass die Schraube 9 so weit in die Einschrauböffnung 10 eingeschraubt werden kann, dass die in Figur 5 gezeigte schräge Stellung des Oberteiles 11 in eine nahezu waagerechte Stellung übergeht, was wiederum bewirkt, dass die Unterseite des Kopfes 16 flächig auf dem Oberteil 11 und die Innenkontur der trichterförmigen Öffnung 18 planparallel zur Anlage an dem gewindefreien Teil 15 zur Anlage kommen. Dadurch ist eine Endmontagestellung sowohl für die Schraube 9 als auch für die Kralle 8 gegeben, die dauerhaft eingehalten wird, da durch die Anlage der Innenkontur der Öffnung 18 an dem gewindefreien Teil 15 wieder eine erhöhte Reibung gegeben ist, die sich in dieser Stellung nicht negativ auf das Eindrehen der Schraube 9 auswirkt, sondern positiv für die dauerhafte Befestigung ist. Da die Schraube 9 axial in die Einschrauböffnung 10 eindringt, ist der Durchmesser des Freiraums 20 so gewählt, dass er größer oder gleich ist als der Durchmesser des Bundsteges 17. Hier könnte daran gedacht werden, dass der Durchmesser des Bundsteges 17 etwas größer ist als der Innendurchmesser des Freiraumes 20, so dass beispielsweise die Spitzen des Bundsteges 19 beim Eindrehen der Schraube 9 in die Einschrauböffnung 10 geringfügig verformt werden, um einen Formschluss herzustellen, der die Schraube 9 zusätzlich in der Einschrauböffnung 10 sichert. Die Öffnung 18 in dem Oberteil 11 hat an ihrem unteren Ende einen Absatz 22, der mit dem Bundsteg 17 in der Endmontagestellung der Schraube 9 korrespondiert, so dass dadurch ebenfalls eine verbesserte Führung der Schraube 9 bei ihrer Bewegung von der Vormontage- in die Endmontagestellung und eine verbesserte Festlegung gegeben ist. Der kleinere untere Innendurchmesser der Öffnung 18 ist dabei so gewählt, dass er zumindest geringfügig kleiner ist als der Außendurchmesser des Bundsteges 17, so dass dadurch die Kralle 8 unverlierbar an der Schraube 9 angeordnet ist.

Während, wie vorstehend beschrieben, die geometrische Ausführung der Schraube 9 derart auf die Kralle 8 abgestimmt ist, dass jederzeit eine definiert geführte Bewegung und Lagerung der Kralle 8 an dem Grundkörper 2 gegeben ist, ist es weiterhin von Vorteil, dass der vorzugsweise topfförmig gestaltete Grundkörper 2 einen Ausschnitt zur geführten Lagerung der Kralle 8, insbesondere deren Übergangsbereich zwischen dem Oberteil 11 und dem Mittenteil 12, aufweist. Die in Figur 5 gezeigte Konstruktion bewirkt, dass die Kralle 8 bei ihrer Bewegung relativ zu dem Grundkörper 2 hin oder von diesem weg definiert geführt ist. Wenn sich zusätzlich noch die Seitenkanten der Kralle 8, insbesondere ein Teil des Oberteiles 11 und ein Teil des Mittenteiles 12, seitlich an dem Grundkörper 2 abstützen können, wird eine weitere Lagerung der Kralle 8 an dem Grundkörper 2 und damit eine geführte Bewegung erzielt.

Abschließend sei darauf hingewiesen, dass das vorstehend beschriebene und in den Figuren gezeigte Ausführungsbeispiel hinsichtlich seiner Anordnungen, Geometrien und Abmessungen dem jeweiligen Anwendungsfall angepaßt werden kann, ohne den grundsätzlichen Erfindungsgedanken zu verlassen.

### Bezugszeichenliste:

- 1.: Antennendose
- 2.: Grundkörper
- 3.: Rahmen
- 4.: Anschlußmittel (ausgangsseitig)
- 5.: Anschlußmittel (ausgangsseitig)
- 6.: Anschlußmittel (ausgangsseitig)
- 7.: Anschlußmittel (eingangsseitig)
- 8.: Kralle
- 9.: Schraube
- 10.: Einschrauböffnung
- 11.: Oberteil
- 12.: Mittenteil
- 13.: Unterteil
- 14.: Gewindeteil
- 15.: gewindefreies Teil
- 16.: Kopf
- 17.: Bundsteg
- 18.: Öffnung
- 19.: Kragen
- 20.: Freiraum
- 21.: Abschrägung
- 22.: Absatz

## Patentansprüche

1. Antennendose (1), die zumindest eine Kralle (8) zur Befestigung der Antennendose (1) in einer Aufnahmevorrichtung aufweist, wobei die Kralle ein Oberteil (11) mit einer Öffnung sowie ein sich darin anschließendes abgewinkeltes Mittenteil (12) und vorzugsweise ein sich daran anschließendes abgewinkeltes Unterteil (13) aufweist, wobei die Kralle (8) mittels einer einen Kopf (16) aufweisenden Schraube (9) an einem Grundkörper (2) der Antennendose (1) befestigbar ist wobei die Schraube (9) einen mit dem Oberteil (11) der Kralle (8) zusammenwirkenden Bundsteg (17) aufweist und die Kralle (8) durch Verdrehen der Schraube (9) relativ zu dem Grundkörper (2) bewegbar ist, wobei der Grundkörper (2) eine Einschrauböffnung (10) zur Aufnahme der Schraube (9) aufweist, **dadurch gekennzeichnet, dass** die Öffnung (18) in dem Oberteil (11) der Kralle (8) trichterförmig ausgebildet ist.

2. Antennendose (1) nach Anspruch 1, **dadurch gekennzeichnet, dass** der Bundsteg (17) zwischen einem Gewindeteil (14) und einem gewindefreien Teil (15) der Schraube (9) angeordnet ist, wobei sich der gewindefreie Teil (15) zwischen dem Bundsteg (17) und dem Kopf (16) der Schraube (9) erstreckt.

3. Antennendose (1) nach Anspruch 1 oder 2, **dadurch gekennzeichnet, dass** das Oberteil (11) der Kralle (8) zwischen der Unterseite des Kopfes (16) und dem oberen Teil des Bundsteges (17) eingespannt ist und damit relativ zu dem Grundkörper (2) bewegbar ist, wenn die Schraube (9) in die Einschrauböffnung (10) ein- bzw. ausgedreht wird, wobei sich die Kralle (8) mit ihrem Übergangsbereich zwischen dem Oberteil (11) und dem Mittenteil (12) an dem Grundkörper (2) und dem Kragen (19) der Einschrauböffnung (10) abstützt, wobei die Kralle (8) aufgrund ihrer Abstützung an dem Grundkörper (2) und dem Kragen (19) oder einem sonstigen Bereich des Grundkörpers (2) als Hebel ausgebildet ist, der als ein freies Ende das Unterteil (13) und als ein eingespanntes Ende das Oberteil (11) aufweist.

4. Antennendose (1) nach Anspruch 1, 2 oder 3, **dadurch gekennzeichnet, dass** sich die Kralle (8) mit ihrem Übergangsbereich zwischen dem Oberteil (11) und dem Mittenteil (12) an dem Grundkörper (2) und einem Kragen (19) der Einschrauböffnung (10) abstützt.

5. Antennendose (1) nach einem der vorhergehenden Ansprüche, **dadurch gekennzeichnet, dass** die Innenkontur der Öffnung (18) so gestaltet ist, dass in ersten Stellung der Schraube (9), vorzugsweise einer Vormontagestellung, die Innenflächen der Öffnung (18) an dem gewindefreien Teil (15) der Schraube (9) anliegen und in einer zweiten Stellung der Schraube (9), vorzugsweise einer Endmontagestellung, wieder an dem gewindefreien Teil (15) der Schraube (9) anliegen und während einer axialen Bewegung der Schraube (9) zwischen diesen beiden Stellungen nicht an dem gewindefreien Teil (15) der Schraube (9) anliegen.

6. Antennendose (1) nach einem der vorhergehenden Ansprüche, **dadurch gekennzeichnet, dass** die Einschrauböffnung (10) im Einführbereich für die Schraube (9) einen gegenüber der Schraube (9) größeren Durchmesser aufweist, so dass zwischen dem Kragen (19) der Einschrauböffnung (10) und der Schraube (9), vorzugsweise dem Gewindeteil (14), ein Freiraum (20) gegeben ist.

7. Antennendose (1) nach Anspruch 6, **dadurch gekennzeichnet, dass** der Bundsteg (17) in der zweiten Stellung der Schraube (9) sich am unteren Ende des Freiraums (20) abstützt.

8. Antennendose (1) nach einem der vorhergehenden Ansprüche, **dadurch gekennzeichnet, dass** der Kragen (19) der Einschrauböffnung (10) im Einführbereich für die Schraube (9) eine umlaufende Abschrägung (21) aufweist.

9. Antennendose (1) nach einem der vorhergehenden Ansprüche, **dadurch gekennzeichnet, dass** der Gewindeteil (14) der Schraube (9) ein metrisches Außengewinde und die Einschrauböffnung (10) ein hierzu passendes metrisches Innengewinde aufweist und/oder die Kralle (8) aus einem Federstahl besteht.

10. Antennendose (1) nach einem der vorhergehenden Ansprüche, **dadurch gekennzeichnet, dass** der vorzugsweise topfförmig gestaltete Grundkörper (2) einen Ausschnitt zur geführten Lagerung der Kralle (8), insbesondere deren Übergangsbereich zwischen dem Oberteil (11) und dem Mittenteil (12), aufweist.

## Claims

1. Antenna socket (1) which has at least one collar (8) for fastening the antenna socket (1) in a receptacle apparatus, wherein the collar has an upper part (11) with an opening, as well as an angled centre part (12), which is connected therein, and preferably has an angled lower part (13), which is connected thereto, wherein the collar (8) can be fastened to a base body (2) of the antenna socket (1) by means of a screw (9) which has a head (16), wherein the screw (9) has a collar web (17) which interacts with the upper part (11) of the collar (8), and the collar (8) can be moved relative to the base body (2) by rotation of the screw (9) wherein the base body (2) has a screw-in opening (10) for holding the screw (9), **characterized in that** the opening (18) in the upper part (11) of the collar (8) is in the form of a funnel.

2. Antenna socket (1) according to Claim 1, **characterized in that** the collar web (17) is arranged between a threaded part (14) and an unthreaded part (15) of the screw (9), wherein the unthreaded part (15) extends between the collar web (17) and the head (16) of the screw (9).

3. Antenna socket (1) according to Claim 1 or 2, **characterized in that** the upper part (11) of the collar (8) is clamped in between the lower face of the head (16) and the upper part of the collar web (17) and can thus move relative to the base body (2) when the screw (9) is screwed into and out of the screw-in opening (10), wherein the collar (8) is supported with its junction area between the upper part (11) and the centre part (12) on the base body (2) and the collar (19) of the screw-in opening (10), wherein the collar (8) is in the form of a lever by virtue of its support on the base body (2) and the collar (19) or some other area of the base body (2), which lever has the lower part (13) as a free end, and the upper part (11) as a clamped-in end.

4. Antenna socket (1) according to Claim 1, 2 or 3, **characterized in that** the collar (8) is supported with its junction area between the upper part (11) and the centre part (12) on the base body (2) and a collar (19) of the screw-in opening (10).

5. Antenna socket (1) according to one of the preceding claims, **characterized in that** the internal contour of the opening (18) is designed such that, when the screw (9) is in a first position, preferably a pre-assembly position, the inner surfaces of the opening (18) rest on the unthreaded part (15) of the screw (9) and, when the screw (9) is in a second position, preferably a final assembly position, once again rests on the unthreaded part (15) of the screw (9) and, does not rest on the unthreaded part (15) of the screw (9) during an axial movement of the screw (9) between these two positions.

6. Antenna socket (1) according to one of the preceding claims, **characterized in that** the screw-in opening (10) has a diameter in the insertion area for the screw (9) which is larger than the screw (9), thus resulting in a free space (20) between the collar (19) of the screw-in opening (10) and the screw (9), preferably the threaded part (14).

7. Antenna socket (1) according to Claim 6, **characterized in that** the collar web (17) is supported on the lower end of the free space (20) when the screw (9) is in the second position.

8. Antenna socket (1) according to one of the preceding claims, **characterized in that** the collar (19) of the screw-in opening (10) has a circumferential incline (21) in the insertion area for the screw (9).

9. Antenna socket (1) according to one of the preceding claims **characterized in that** the threaded part (14) of the screw (9) has a metric external thread and the screw-in opening (10) has a metric internal thread matching this external thread, and/or the collar (8) is composed of a spring steel.

10. Antenna socket (1) according to one of the preceding claims, **characterized in that** the base body (2), which is preferably in the form of a pot, has a cut out for the guided bearing of the collar (8), in particular of its junction area between the upper part (11) and the centre part (12).

## Revendications

1. Prise d'antenne (1), qui présente au moins une griffe d'ancrage (8) pour la fixation de la prise d'antenne (1) dans un dispositif de réception, la griffe d'ancrage présentant une partie supérieure (11) avec une ouverture ainsi qu'une partie centrale coudée (12) se raccordant dans celle-ci et de préférence une partie inférieure (13) coudée se raccordant à celle-ci, la griffe d'ancrage (8) pouvant être fixée au moyen d'une vis (9) présentant une tête (16) à un corps de base (2) de la prise d'antenne (1), la vis (9) présentant une nervure d'épaulement (17) coopérant avec la partie supérieure (11) de la griffe d'ancrage (8), et la griffe d'ancrage (8) pouvant être déplacée par rotation de la vis (9) par rapport au corps de base (2), le corps de base (2) présentant une ouverture de vissage (10) pour recevoir la vis (9), **caractérisée en ce que** l'ouverture (18) dans la partie supérieure (11) de la griffe d'ancrage (8) est réalisée en forme d'entonnoir.

2. Prise d'antenne (1) selon la revendication 1, **caractérisée en ce que** la nervure d'épaulement (17) est disposée entre une partie filetée (14) et une partie non filetée (15) de la vis (9), la partie non filetée (15) s'étendant entre la nervure d'épaulement (17) et la tête (16) de la vis (9).

3. Prise d'antenne (1) selon la revendication 1 ou 2, **caractérisée en ce que** la partie supérieure (11) de la griffe d'ancrage (8) est serrée entre le côté inférieur de la tête (16) et la partie supérieure de la nervure d'épaulement (17) et peut ainsi être déplacée par rapport au corps de base (2), lorsque la vis (9) est vissée ou dévissée dans l'ouverture de vissage (10), la griffe d'ancrage (8) s'appuyant avec sa zone de transition entre la partie supérieure (11) et la partie centrale (12) contre le corps de base (2) et le rebord (19) de l'ouverture de vissage (10), la griffe d'ancrage (8) étant réalisée, en raison de son support sur le corps de base (2) et le rebord (19) ou une autre région du corps de base (2), sous forme de levier, dont la partie inférieure (13) sert d'extrémité libre, et la partie supérieure (11) d'extrémité serrée.

4. Prise d'antenne (1) selon la revendication 1, 2 ou 3, **caractérisée en ce que** la griffe d'ancrage (8) s'appuie avec sa région de transition entre la partie supérieure (11) et la partie centrale (12) contre le corps de base (2) et un rebord (19) de l'ouverture de vissage (10).

5. Prise d'antenne (1) selon l'une quelconque des revendications précédentes, **caractérisée en ce que** le contour interne de l'ouverture (18) est configuré de telle sorte que dans une première position de la vis (9), de préférence une position de prémontage, les surfaces internes de l'ouverture (18) s'appliquent contre la partie non filetée (15) de la vis (9), et dans une deuxième position de la vis (9), de préférence une position de montage finale, les surfaces internes de l'ouverture (18) s'appliquent à nouveau contre la partie non filetée (15) de la vis (9), et pendant un mouvement axial de la vis (9) entre ces deux positions, ne s'appliquent pas contre la partie non filetée (15) de la vis (9).

6. Prise d'antenne (1) selon l'une quelconque des revendications précédentes, **caractérisée en ce que** l'ouverture de vissage (10) présente dans la région d'introduction pour la vis (9) un diamètre plus grand par rapport à la vis (9), de sorte qu'entre le rebord (19) de l'ouverture de vissage (10) et la vis (9), de préférence la partie filetée (14), il existe un espace libre (20).

7. Prise d'antenne (1) selon la revendication 6, **caractérisée en ce que** la nervure d'épaulement (17) s'appuie à l'extrémité inférieure de l'espace libre (20) dans la deuxième position de la vis (9).

8. Prise d'antenne (1) selon l'une quelconque des revendications précédentes, **caractérisée en ce que** le rebord (19) de l'ouverture de vissage (10) présente, dans la région d'introduction pour la vis (9), un biseautage périphérique (21).

9. Prise d'antenne (1) selon l'une quelconque des revendications précédentes, **caractérisée en ce que** la partie filetée (14) de la vis (9) présente un filetage externe métrique et l'ouverture de vissage (10) présente un filetage interne métrique correspondant, et/ou la griffe d'ancrage (8) se compose d'un acier à ressort.

10. Prise d'antenne (1) selon l'une quelconque des revendications précédentes, **caractérisée en ce que** le corps de base (2) de préférence de configuration en forme de pot présente une portion pour le support guidé de la griffe d'ancrage (8), notamment de sa région de transition entre la partie supérieure (11) et la partie centrale (12).
